(19) Europäisches Patentamt / European Patent Office / Office européen des brevets

(11) **EP 2 255 917 A1**

(12) **EUROPEAN PATENT APPLICATION**

(43) Date of publication:
**01.12.2010 Bulletin 2010/48**

(51) Int Cl.:
**B23K 11/25** (2006.01)    **B23K 11/31** (2006.01)

(21) Application number: **10163920.1**

(22) Date of filing: **26.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **29.05.2009 IT BO20090351**

(71) Applicant: **TECNA S.p.A.**
**40024 Castel San Pietro Terme (Bologna) (IT)**

(72) Inventor: **Lolli, Andrea**
**40054 Budrio (Bologna) (IT)**

(74) Representative: **Modiano, Micaela Nadia et al**
**Modiano & Partners**
**Via Meravigli, 16**
**20123 Milano (IT)**

(54) **Device for detecting the thickness of the material to be welded with a welder and related welder fitted with the device**

(57)    A device (1) for detecting the thickness (X) of the material to be welded with a welder (2), preferably of the type known as resistance tack welder provided with two electrodes (3, 4), of which at least one is movable, with which to clamp the components (A, B) to be welded.

The device (1) comprises at least one element (5) for detecting the position of a respective movable electrode (3) with respect to a reference position that corresponds to the maximum mutual distance of the electrodes (3, 4), a processing unit (6) that is adapted to calculate the thickness (X) of the components to be welded (A, B) as the difference between the maximum mutual distance of the two electrodes (3, 4) arranged in the reference position and the movement performed by the electrodes to reach the configuration for clamping the components to be welded (A, B).

Fig. 1

EP 2 255 917 A1

**Description**

The present invention refers to a device for detecting the thickness of the material to be welded with a welder, particularly with a welder with punctiform electrodes (normally known as a tack welder) and a related welder (tack welder) provided with such device and adapted to exploit the data calculated by it.

Tack welding is also known as spot welding, which is a type of resistance welding consisting of fitting together the parts of material to be welded and of compressing the two pieces by means of a machine. Subsequently, the passage of electricity (electrical current) heats the bodies to be welded until the melting point occurs, within a few seconds, thus uniting the two materials by means of a kind of internal and transversal pin (defined by the path of the electrical current during the welding) that is constituted by some portions of each element in the weld. The so-called 'transversal pin' is not a pin constituted of other materials, but rather it is constituted of the materials traversed by the flow of electric current which, by melting, stably unite, taking the shape of the path taken by the flow of current (and is therefore cylindrical in shape, like a pin).

Tack welding is used to generate weld points on pieces to be joined, i.e. without creating a weld bead or a continuous weld with no interruptions, but by creating multiple spot melts at distances that are more or less regular with respect to each other. This method of welding is often used to bond parts that are subject to mechanical forces of various extents (the process is indicated for small forces but it is also, in some cases, suitable for resisting intense forces), or in any case to bond parts between which the welding does not have to create a hermetic join.

In order to obtain a stable and strong spot weld it is necessary that the amount of electrical energy that flows from the electrodes across the portions of material to be welded be commensurate to the overall thickness of the overlapping materials, to the material constituting the electrodes, and to the characteristics of the surfaces of such materials that face each other.

Setting the machine parameters that depend on the type of material and on the characteristics of the surfaces is substantially straightforward: there are standardised criteria that are straightforward to apply, therefore it is possible to have various different operation settings as a function of these parameters which can be substantially standardised.

As regards the overall thickness of the materials to be welded, it is instead recognised that it is a parameter of fundamental importance for executing a strong weld: the energy flow that has to melt the material, in fact, must necessarily be commensurate to the amount of material on which it is to act.

It is therefore evident that the electrical parameters must be set so as to make the best weld possible with that particular thickness of material.

The detection of the thickness is generally assigned to a direct measurement performed by the operator.

Applying measurement elements at the electrodes is particularly complex because such elements must tolerate the phenomena associated with the establishing of the extremely high flow of electrical current that takes place in their proximity: electromagnetic induction, disturbances due to the harmonic wave content, etc.

The aim of the present invention is to solve the above mentioned drawbacks, by providing a device for detecting the thickness of the material to be welded with a welder, that can be located in proximity to the electrodes of said welder and which is not excessively subject to the inductive and electromagnetic phenomena associated with the flow of current.

Within this aim, an object of the invention is to devise a welder provided with a device according to the invention that is completely automatic, in which the intensity of the current, the duration of the passage and all the other typical parameters of operation are automatically determined by said device as a function of the characteristics of the pieces to be welded.

A further object of the present invention is to provide a device for detecting the thickness of the material to be welded with a welder and the related welder that have a low cost, are easy to provide in practice and safe in application.

This aim and these and other objects which will become better apparent hereinafter are achieved by a device for detecting the thickness of a material to be welded with a welder, a welder preferably of the type known as resistance tack welder provided with two electrodes, of which at least one is movable, with which the components to be welded are clamped, **characterized in that** it comprises at least one element for detecting the position of a respective movable electrode with respect to a reference position that corresponds to the maximum mutual distance of the electrodes, a processing unit that is adapted to calculate the thickness of the components to be welded as the difference between the maximum mutual distance of the two electrodes arranged in the reference position and the movement performed by said electrodes to reach the configuration for clamping the components to be welded.

Such objects are also achieved by a welder of the type known as resistance tack welder provided with two electrodes, of which at least one is movable and with which the components to be welded are clamped, of the type comprising a control and management processor, which controls an electric welding transformer, and respective apparatuses for measuring the electrical values that are present on the electrodes, **characterized in that** it comprises a device for detecting the thickness of the material to be welded, which is controlled by said processor, and a memory element for collecting the setting parameters of the welder as a function of the characteristics of the components to be welded, said processor, depending on the thickness detected by said device, selecting the respective welding parameters from said memory element.

Further characteristics and advantages of the invention will become better apparent from the following detailed description of a preferred, but not exclusive, embodiment of the device for detecting the thickness of the material to be welded with a welder and the related welder, according to the invention, illustrated by way of a non-limiting example in the accompanying drawings, wherein:

Figure 1 is a schematic view of a device for detecting the thickness of the material to be welded with a welder according to the invention;

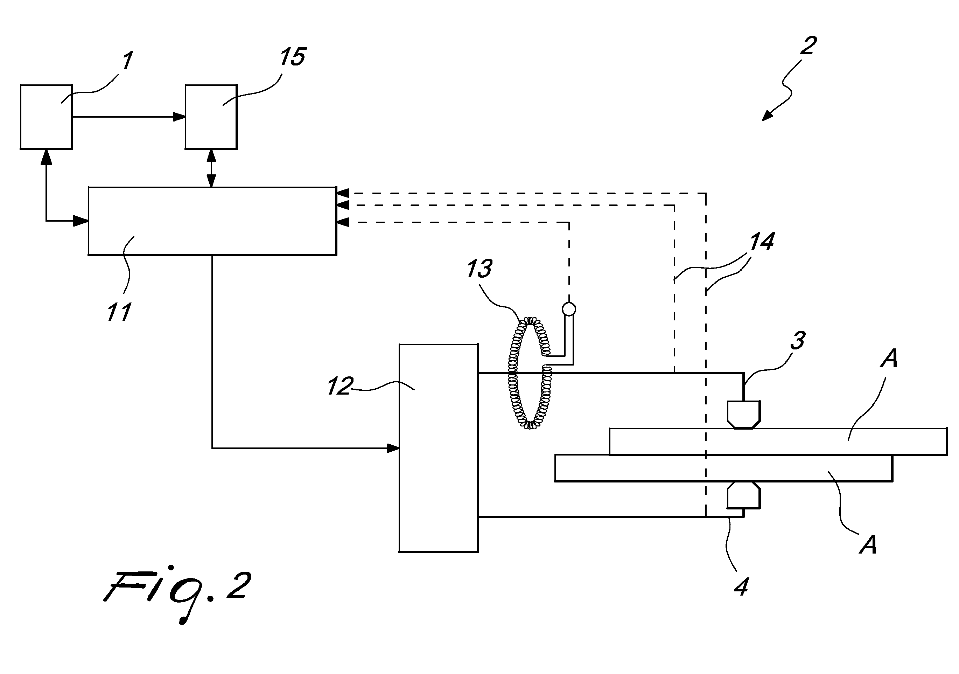

Figure 2 is a schematic view of a welder of the type known as resistance tack welder provided with the device according to the invention.

With reference to the figures, the reference numeral 1 generally designates a device for detecting the thickness X of the material to be welded with a welder 2 and the related welder 2.

The welder 2 that is adapted to be fitted with the device 1 according to the invention is preferably of the type known as resistance tack welder.

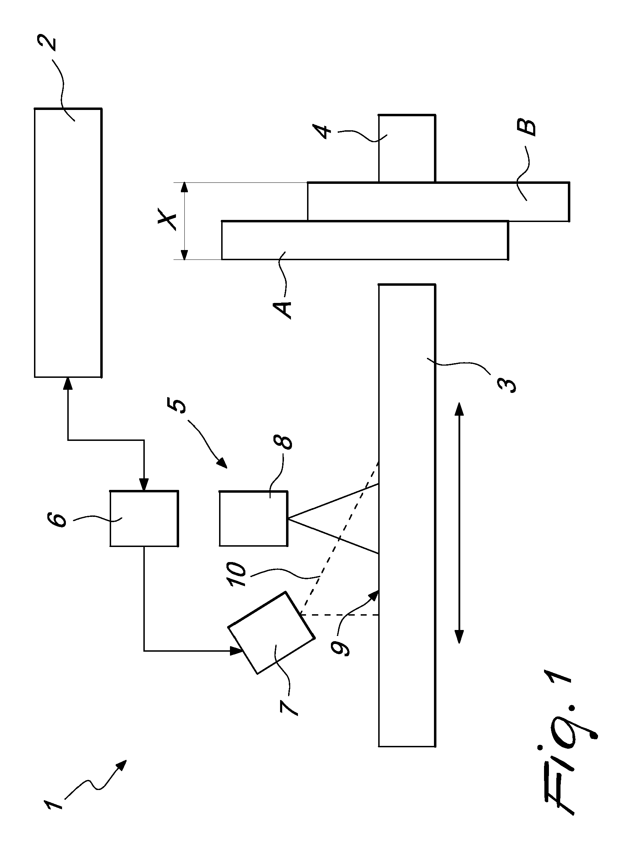

Such welder type is provided with two electrodes 3 and 4, of which at least one is movable (according to the particular embodiment shown in Figure 1 the electrode 3 is movable while the electrode 4 is fixed), with which to clamp the components to be welded A and B (it is also possible that there may be a greater number of overlapping components, since the device 1 according to the invention and the welder 2 fitted with it operate optimally for any number of overlaid components to be welded).

The device 1 comprises at least one element 5 for detecting the position of a respective movable electrode 3 with respect to a reference position that corresponds to the maximum mutual distance of the electrodes 3 and 4.

The device 1 further comprises a processing unit 6 that is adapted to calculate the thickness X of the components to be welded A and B as the difference between the maximum mutual distance of the two electrodes 3 and 4 arranged in the reference position and the movement performed by such electrodes to reach the configuration for clamping the components to be welded A and B. In fact, known the maximum width of aperture of the electrodes 3 and 4 (the mutual distance when they are in the condition of maximum aperture) it is sufficient to know by how much they have moved towards each other to clamp the components A and B in order to determine, by difference, the thickness X of the components A and B.

The position detection element 5, according to an embodiment of particular practical interest in application, is of the optical type and comprises, for the respective associated electrode 3, a light source 7 that faces and is proximate to the respective electrode 3, and an image acquisition element 8 which faces and is proximate to the respective electrode 3 and which is aligned with the area 9 struck by the light beam 10 emitted by the light source 7.

The light source 7 and the image acquisition element 8 are functionally associated with the processing unit 6: the movable electrode 3 is illuminated (in particular, an area 9 thereof) by the light source 7. By means of the image acquisition element 8, images are acquired in sequence of the area 9 of the electrode 3 illuminated by the light source 7. The images acquired by the element 8 are transferred to the processing unit 6 which also controls the light source 7. The processing unit 6 compares two images taken at two successive time intervals and by analysing the movement of characteristic points thereof (detectable on the surface of the electrode 3) such processing unit performs the calculation of the movement of the electrode 3 in the time interval elapsed between two consecutive photograms. By integrating, over time, the individual temporal movements measured between two consecutive photograms, the measurement of the movement of the movable electrode 3 is obtained.

By knowing the movement of the movable electrode 3 with respect to the fixed electrode 4 (or by knowing the movement of both of the movable electrodes, according to a configuration not shown in the figure) it is possible to know the thickness X of the components to be welded A and B.

This operation is performed automatically during the closing of the electrodes 3 and 4 that belong to the resistance welder 2. The thickness X calculated by the processing unit 6 will then be sent to the welder 2.

According to an embodiment of undoubted interest in application, the image acquisition element 8 is a high-speed video camera that is adapted to detect a sequence of chronologically successive images according to acquisitions ranging from approximately ten to over several thousands of images per second.

It should be noted that high-speed video cameras can acquire up to hundreds of thousands of photograms per second: the choice of video cameras offering this type of performance is not excluded if the maximum possible speed and the maximum possible precision of the device 1 according to the invention are necessary.

From a construction point of view, the welder 2 provided with the device 1 according to the invention requires the processing unit 6 of the device 1 to be connected to an internal processor 11 of the welder 2 in order to send the detected data, relating to the thickness X of the components to be welded A and B, to the processor 11.

With particular reference to the embodiment shown in Figure 1, the electrode 4 is fixed and is adapted to accommodate, by stable resting, the components to be welded A and B (in the figure they are shown resting on such electrode), and the electrode 3 is movable from a configuration of maximum mutual distance to a configuration of clamping the components A and B against the fixed electrode 4: obviously, the position detection element 5 is single in this case and is associated only with the movable electrode 3 (the position of the fixed electrode 4 is by definition not variable).

The welder 2, adapted to be fitted with the device 1 according to the invention, is of the type known as resistance tack welder provided with two electrodes 3 and 4, and comprises a control and management processor 8 which controls an electric welding transformer 12, and respective apparatuses 13 and 14 for measuring the electrical values that are present on the electrodes 3 and 4.

More specifically, the welder 2 comprises the device 1 for detecting the thickness X of the material to be welded, which is controlled by the processor 11, and a memory element 15 for collecting the setting parameters of the welder 2 as a function of the characteristics of the components to be welded A and B.

The processor 11, as a function of the thickness X detected by the device 1, selects the respective welding parameters from the most suitable ones contained in the memory element 15.

The memory element 15 contains strings of parameters for a plurality of values of electrical resistance of the components to be welded A and B (intended as the overall electrical resistance of the various overlaid components): if the material constituting such components is known (and the resistivity value is therefore known), the specific electrical resistance is only determined by the measurement of their thickness X. Reference is made to the formula

$$R = \rho * L/S$$

where p is the resistivity (in $\Omega * mm^2 /m$), L is the length of the portion (in m) and S the section (in $mm^2$). The value of the section is assumable as a function of the section of the electrodes 3 and 4, and the thickness X is known (the length L of the formula corresponds to the thickness X in the application in question) as is the resistivity, and thus it is possible to know the value of electrical resistance.

According to a particular application of certain practical interest, the measurement apparatuses 13 and 14 are of a known type, in particular the current detector 13 is preferably constituted by a Rogowski coil which acts along the electrodes 3 and 4 to measure the value of the current that traverses them, and the voltage detector 14 is a traditional voltmeter that acts between the electrodes 3 and 4.

Advisably, the movable electrode 3 can be associated with a respective actuator for translational motion controlled and driven by the processor 11. In this way the operation of the welder 2 is completely automatic, since the positioning of the electrodes 3 and 4, the detection of the thickness X of the components to be welded A and B and the choice of the welding parameters as a function of the resistance of the components to be welded A and B are managed automatically by the processor 11.

The thickness X of the components to be welded A and B is thus used as a search key in a database stored in the element 15. According to the initial thickness X the parameters to perform the measurement of the electrical resistance of the components A and B are selected. The parameters identified are transferred to the processor 11 of the welder 2 which drives the welding transformer 12; the current detector 13 measures the secondary current by means of the Rogowski coil and the voltage detector 14 measures the secondary voltage by means of the respective terminals connected to the electrodes 3 and 4. The processor 11 obtains the initial value of the electrical resistance of the components to be welded A and B; such value is used in the database stored in the element 15 as a second search key to identify the correct welding parameters. Such parameters are transferred to the processor 11 of the welder 2 automatically so as to complete the welding of the components A and B using the correct welding parameters.

The automated welding procedure, adopted by all the welders 2 that are fitted with the device 1 according to the invention, comprises the following steps:

step a): arranging the components to be welded A and B between the electrodes 3 and 4;
step b): clamping the electrodes 3 and 4 onto the components A and B during an automatic detection of their position in order to determine the thickness X of the clamped components A and B by means of at least one element 5 for detecting the position of the electrodes 3 and 4;
step c): determining the value of electrical resistance, being known the thickness X, detected earlier, and the resistivity of the components A and B to be welded by means of an adapted processor 11 of the welder 2;
step d): selecting the welding parameters, relating mainly to intensity, type and duration of the flow of electrical current between the electrodes 3 and 4 through the components A and B, relating to the particular value of electrical resistance determined in the step c), from a database that is stored in a memory element 15 of the welder 2 that is controlled by the processor 11, and setting them automatically by means of the processor 11;
step e): performing the weld by starting the flow of current according to the set parameters.

The invention, thus conceived, is susceptible of numerous modifications and variations, all of which are within the scope of the appended claims; in addition, all the details may be replaced by other technically equivalent elements.

In the embodiments illustrated, individual characteristics shown in relation to specific examples may in reality be interchanged with other, different characteristics, existing in other embodiments.

In addition, it should be noted that anything found to be already known during the patenting process is understood not to be claimed and to be the subj ect of a disclaimer.

In practice the materials employed, as well as the dimensions, may be any according to requirements and to the state of the art.

The disclosures in Italian Patent Application No. BO2009A000351 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for detecting the thickness (X) of a material to be welded with a welder (2), a welder (2) preferably of the type known as resistance tack welder provided with two electrodes (3, 4), of which at least one is movable, with which the components (A, B) to be welded are clamped, **characterized in that** it comprises at least one element (5) for detecting the position of a respective movable electrode (3) with respect to a reference position that corresponds to the maximum mutual distance of the electrodes (3, 4), a processing unit (6) that is adapted to calculate the thickness (X) of the components to be welded (A, B) as the difference between the maximum mutual distance of the two electrodes (3, 4) arranged in the reference position and the movement performed by said electrodes to reach the configuration for clamping the components to be welded (A, B).

2. The device according to claim 1, **characterized in that** said position detection element (5) is of the optical type and comprises, for the respective associated electrode (3), a light source (7) that faces and is proximate to the respective electrode (3), an image acquisition element (8) which faces and is proximate to the respective electrode (3) and is aligned with the area (9) struck by the light beam (10) emitted by said light source (7), said light source (7) and said image acquisition element (8) being functionally associated with said processing unit (6).

3. The device according to claim 2, characterized that said image acquisition element (8) is a high-speed video camera that is adapted to detect a sequence of chronologically successive images according to acquisitions ranging from approximately ten to over several thousands of images per second.

4. The device according to claim 1, **characterized in that** said processing unit (6) is connected to an internal processor (11) of said welder (2) to send the detected data related to the thickness (X) of the components (A, B) to be welded, to said processor (11).

5. The device according to claim 1, **characterized in that** one of said electrodes (4) is fixed and is adapted to accommodate, by stable resting, said components to be welded (A, B), and the other one (3) is movable from a configuration of maximum mutual distance to a configuration for clamping said components (A, B) against the fixed electrode (4), said position detection element (5) being single and being associated only with the movable electrode (3).

6. A welder of the type known as resistance tack welder provided with two electrodes (3, 4), of which at least one is movable and with which the components to be welded (A, B) are clamped, of the type comprising a control and management processor (11), which controls an electric welding transformer (12), and respective apparatuses (13, 14) for measuring the electrical values that are present on the electrodes (3, 4), **characterized in that** it comprises a device (1) for detecting the thickness (X) of the material to be welded, which is controlled by said processor (11), and a memory element (15) for collecting the setting parameters of the welder (2) as a function of the physical and dimensional properties of the components to be welded (A, B), said processor (11), depending on the thickness (X) detected by said device (1), selecting the respective welding parameters of said memory element (15).

7. The welder according to claim 6, **characterized in that** said memory element (15) contains strings of parameters related to a plurality of values of electrical resistance of the components to be welded (A, B), if the material that constitutes said components (A, B) is known the specific electrical resistance being determined uniquely by the measurement of their thickness (X).

8. The welder according to claim 6, **characterized in that** said measurement apparatuses (13, 14) comprise a current detector (13), which is constituted preferably by a Rogowski coil which acts along said electrodes (3, 4) and a voltage detector (14) that acts between said electrodes (3, 4).

9. The welder according to claim 6, **characterized in that** said movable electrode (3) is associated with a respective actuator for translational motion controlled and driven by said processor (11), the operation of said welder (2) being completely automatic, since the positioning of the electrodes (3, 4), the detection of the thickness (X) of the components to be welded (A, B) and the choice of the welding parameters as a function of the resistance of the components to be welded (A, B) are managed automatically by said processor (11).

**10.** An automated welding method for welders (2) of the type of resistance tack welders provided with two electrodes (3, 4), which comprises the steps of

- arranging the components to be welded (A, B) between the electrodes (3, 4);
- clamping the electrodes (3, 4) onto the components (A, B) during an automatic detection of their position in order to determine the thickness (X) of the clamped components (A, B), by means of at least one element (1) for detecting the position of said electrodes (3, 4);
- determining the value of electrical resistance, knowing the thickness (X), detected earlier, and the resistivity of the components to be welded (A, B), by means of an adapted processor (11) of said welder (2);
- selecting the welding parameters, related mainly to intensity, type and duration of the flow of electric current between the electrodes (3, 4) through the components to be welded (A, B), related to the particular value of electrical resistance determined in the preceding step, from a database that is stored in a memory element (15) of the welder (2) that is controlled by said processor (11), and setting them automatically by means of the processor (11);
- performing the weld by starting the flow of current according to the set parameters.

Fig.1

EP 2 255 917 A1

EP 2 255 917 A1

*Fig.2*

Europäisches Patentamt

European Patent Office

Office européen des brevets

**EUROPEAN SEARCH REPORT**

Application Number

EP 10 16 3920

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2003 225771 A (OBARA CORP) 12 August 2003 (2003-08-12) * abstract; figures * | 1-7,9,10 | INV. B23K11/25 B23K11/31 |
| X | JP 11 090644 A (SEIWA MFG) 6 April 1999 (1999-04-06) * abstract; figures * | 1,4-10 | |
| X | JP 11 309584 A (NADEX CO LTD) 9 November 1999 (1999-11-09) * abstract; figures * | 1,6,10 | |
| X | JP 11 179560 A (NISSAN MOTOR) 6 July 1999 (1999-07-06) * abstract; figures * | 1,6,10 | |
| X | JP 2003 230965 A (OBARA CORP) 19 August 2003 (2003-08-19) * abstract; figures * | 1,6,10 | |
| X | JP 7 155967 A (HONDA MOTOR CO LTD) 20 June 1995 (1995-06-20) * abstract; figures * | 1,6,10 | TECHNICAL FIELDS SEARCHED (IPC) B23K |
| X | US 2002/053555 A1 (MATSUYAMA KIN-ICHI [US]) 9 May 2002 (2002-05-09) * abstract; figures * | 1,6,10 | |
| A | GB 2 218 025 A (HONDA MOTOR CO LTD [JP]) 8 November 1989 (1989-11-08) * abstract * | 2,3 | |

The present search report has been drawn up for all claims

| Place of search | Date of completion of the search | Examiner |
|---|---|---|
| Munich | 6 September 2010 | Caubet, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 16 3920

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2010

| Patent document cited in search report | | Publication date | Patent family member(s) | | Publication date |
|---|---|---|---|---|---|
| JP 2003225771 | A | 12-08-2003 | NONE | | |
| JP 11090644 | A | 06-04-1999 | NONE | | |
| JP 11309584 | A | 09-11-1999 | NONE | | |
| JP 11179560 | A | 06-07-1999 | JP | 3852190 B2 | 29-11-2006 |
| JP 2003230965 | A | 19-08-2003 | JP | 4076208 B2 | 16-04-2008 |
| JP 7155967 | A | 20-06-1995 | JP | 3266390 B2 | 18-03-2002 |
| US 2002053555 | A1 | 09-05-2002 | NONE | | |
| GB 2218025 | A | 08-11-1989 | CA | 1312927 C | 19-01-1993 |
| | | | JP | 1151986 U | 19-10-1989 |
| | | | JP | 7047182 Y2 | 01-11-1995 |
| | | | US | 4970361 A | 13-11-1990 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT BO20090351 A